# EUROPEAN PATENT SPECIFICATION

(11) **EP 4 096 879 B1**
(45) Date of publication and mention of the grant of the patent: **20.12.2023**
(21) Application number: 20810996.7
(22) Date of filing: 26.11.2020
(51) Int. Cl.: B26B 1/00, B26B 15/00

(54) **CUTTING TOOL**
SCHNEIDWERKZEUG
OUTIL DE DÉCOUPE

(30) Priority: 29.01.2020 EP 20154316
(43) Date of publication of application: 07.12.2022
(73) Proprietor: HUSQVARNA AB, 561 82 Huskvarna (SE)
(72) Inventor: RUDOLF, Peter, 89250 Senden (DE)
(74) Representative: Finkele, Rolf
(86) International application number: PCT/EP2020/083462
(87) International publication number: WO 2021/151548

(56) References cited:
- WO-A1-2018/205126
- JP-A- H08 257 259
- US-A- 5 353 504
- US-A1- 2009 151 170
- US-A1- 2011 016 730

## Description

### TECHNICAL FIELD

The present disclosure relates to a cutting tool. More specifically, the present disclosure relates to the cutting tool which allows safe and user-friendling handling and disassembly of blades of the cutting tool.

### BACKGROUND

Cutting tools such as secateurs, loppers, rakes, pliers are used for performing cutting action using one or more blades. Put simply, such tools provide increased mechanical assistance and ease of operation to a common user to conveniently perform operations such as with branches of varying dimensions. Further, the cutting tools provide benefits such as trapping bypass cutting or simply "bypass" allows pruning/cutting by the cutting tools while holding an object (i.e. branch) with one of the cutting edges.

However, there may be many instances where working with the cutting tool becomes inconvenient and unsafe for a user to handle. For instance, on unbolting a removeable nut provided at a pivoted point of one or more blades and one or more handles of the cutting tools, there are chances of the one or more handles to inadvertently disassemble during blade(s) replacement. This segregation of the one or more handles may deform structure of the cutting tool or pose hindrances or even damage to some accessories (say wires) assembled within the one or more handles.

An example of a cutting tool is provided in US patent application 10, 076, 827 (hereinafter referred to as '827 reference). The '827 reference provides a cutting tool. The cutting tool is constructed with an upper tool handle assembly and a lower tool handle assembly which are configured to be snap-fit together to enable pivotal movement between the upper tool handle assembly and the lower tool handle assembly. Further, a biasing member is secured between the upper tool handle assembly and the lower tool handle assembly in order to bias the upper tool handle assembly and the lower tool handle assembly to an open default position and in order to bias a pair of cutting blades into an object receiving open position. However, the ' 827 reference falls short of providing an easy to handle, compact, and user-friendly cutting tool to the common user.

The document US 2009/0151170 A1 discloses a hand-operated pruning clipper having a top handle and a bottom handle with bypass cutting blades. Handles and blades are attached to each other by a removable fastener. Removal of the fastener results in disassembly of the blades and handles. A further example of prior art is given by the patent documentation JPH8257259.

Thus, there is a need of an improved cutting tool which allows ease of disassembly of blades without inadvertently disturbing handles or other parts of the cutting tool.

### SUMMARY

In view of the above, it is an objective of the present invention to solve or at least reduce the drawbacks discussed above. The objective is at least partially achieved by a cutting tool. The cutting tool includes a first blade and a second blade. The second blade is pivotally coupled to the first blade at a pivot point. The first blade and the second blade together perform a cutting action on an object placed between them. The cutting tool further includes a first handle and a second handle. The first handle is operatively coupled to the first blade. The second handle is operatively coupled to the second blade. The cutting tool is characterized in that the first handle is pivotally coupled to the second handle at the pivot point, while the first handle and the second handle are pivotally coupled together . A removable fastener pivotally couples the first blade and the second blade at the pivot point and pivotally couples the first handle and the second handle at the pivot point. Removal of the fastener decouples the first blade from the second blade, wherein removal of the fastener does not decouple the first handle from the second handle. Consequently, it is possible to disassemble or to eject one or both blades, while the handles remain coupled to each other.The fastener helps in removable and user-friendly coupling of the first blade and the second blade. Thus, the present disclosure provides a simple, convenient, and user-friendly cutting tool which allows ease of blade(s) replacement without hampering or distorting handle(s) or other parts, in particular the wire electrically connecting electrical components located within the different handles, of the cutting tool inadvertently.

According to an embodiment of the present invention, the cutting tool comprises a handle connection for pivotally coupling the first handle and the second handle together, wherein the handle connection is different from the removable fastener. Thus, first and second handle may be pivotally coupled together even if the removable fastener has been removed, while the blade is released for removal.

According to an embodiment of the present invention, the handle connection comprises connection elements provided by, in particular formed to, the first handle and the second handle to connect the first handle and the second handle to each other. In that way the number of connection elements can be reduced and assembling of the handles can be simplified.

According to an embodiment of the present invention, the connection elements are configured to form a form fit connection. Thus, a stable connection can be provided, wherein the handles can be connected in a simple way without using tools.

According to an embodiment of the present invention, removal of the fastener allows ejection of the first blade and/or the second blade, while first handle and second handle remain coupled, in particular by a handle connection different from the fastener, preferably by a form fit. Thus, the handles are coupled to each other also in the case that the fastener is removed. Assembling and disassembling of the cutting tool is simplified.

According to an embodiment of the present invention, first and second handle may be pivotally coupled together through a form fit or a form fit connection. Moreover, the form fit or form fit connection may be provided at or close to the pivot point between the first handle and the second handle. Thus, smooth pivotal movement can be ensured.

According to an embodiment of the present invention, the form fit is realized via a snap fit connection. The form fit allows to avoid inadvertent disassociation of the first handle and the second handle, even after the removal of the fastener.

According to an embodiment of the present invention, the form fit is a removable connection. The form fit helps in isolation of the first handle and the second handle as per requirements.

According to an embodiment of the present invention, the first handle or the second handle are provided with one or two or more, in particular resilient, tabs forming the form fit by coupling with one or more contours provided on the respective other first or second handle. Such tabs enable forming of a snap fit connection for easily snapping the handle together by establishing a stable but still pivotable connection.

According to an embodiment of the present invention, the first handle and/or the second handle may comprise an opening that is concentrically arranged to the pivot point, wherein one or more of the contours for coupling with the tabs may be formed by a surface delimiting or being arranged close to the opening of the first handle or the second handle. By means of such an opening, it is possible to arranged the removable fastener in said opening, wherein the connection of the handles is arranged around the fastener. Thus, the fastener can be removed and the connection between the handles remains established in an advantageous way.

According to an embodiment of the present invention, the one or more contours may be provided as a circular step arranged within the opening. Such a contour may be formed simply on a injection moulded component like one of the handles and may enable a pivotal movement without being negatively affected by disturbing geometries.

According to an embodiment of the present invention, the one or two or more tabs may be formed integrally to the first or second handle. The tabs may be provided on or as a sleeve element or a ring element. The sleeve element or the ring element may arranged concentrically to the pivot point. On a sleeve element or a ring element, the tabs may be provided in an advantageous form having sufficient resilience to by easily snapped in. On the other hand, such a sleeve element or ring element is advantageous, because the fastener being arranged within the opening may hinder the tabs to be released from the contours, thus, allowing disassembly of the handles only in the case when the fastener has been removed.

According to an embodiment of the present invention, one or two or more tabs may be provided as snap elements or engagement hooks for form fittingly coupling with the one or more contours. Snap elements or engagement hooks are advantageous for coupling with contours of a counter element.

According to an embodiment of the present invention electrical components associated with the first handle and within the second handle are electrically connected via a wire. This allows to easily associate various different electrical components of the cutting tool with different ones of the two handles. In a preferred embodiments at least some of the associated components are incorporated inside of at least one of the handles, which allows to enhance their protection as well as to optimize the ergonomics of the handles.

According to an embodiment of the present invention, the wire is a sensor wire. The sensor wire detects the force applied by the user which is further sent to a drive unit (or processor) to take the applied force into account for providing mechanical advantage, if required.

According to an embodiment of the present invention, the sensor wire is present substantially within the first handle. Some part of the sensor wire is also running through the second handle. This makes the arrangement of the cutting tool more compact, ergonomic and helps in uniform distribution of the wire.

Other features and aspects of this invention will be apparent from the following description and the accompanying drawings.

### BRIEF DESCRIPTION OF THE DRAWINGS

The invention will be described in more detail with reference to the enclosed drawings, wherein:
FIG. 1 shows a perspective view of a cutting tool, in accordance with an aspect of the present disclosure;
FIG. 2 shows a perspective view of a drive unit within the cutting tool, in accordance with an aspect of the present disclosure;
FIG. 3 shows a perspective view of the cutting tool, in accordance with another aspect of the present disclosure
FIG. 4 shows a perspective view of an adapter of the cutting tool, in accordance with an aspect of the present disclosure;
FIG. 5 shows a perspective view of the cutting tool showing disassembly of a fastener, in accordance with another aspect of the present disclosure; and
FIG. 6 shows a perspective view of a form fit connection of a first handle and a second handle of the cutting tool, in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

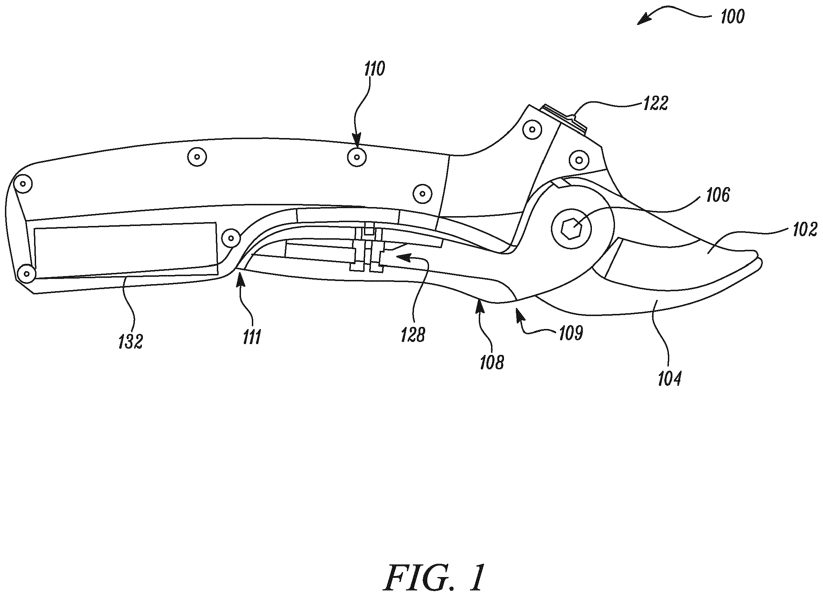

FIG. 1 illustrates a cutting tool 100. The cutting tool 100 of the present disclosure is illustrated as secateurs, however, the present disclosure may be readily applied to any cutting tool 100 such as, but not limited to, a lopper, shears, scissors etc. with two or more cutting edges. The cutting tool 100 includes one or more blades i.e. a first blade 102 and a second blade 104. The first blade 102 is a replaceable blade. Further, the second blade 104 is pivotally coupled to the first blade 102. The first blade 102 and the second blade 104 together perform a cutting action on an object (generally a branch) placed between them. In one embodiment the cutting tool 100 further includes a lid 132. This allows for an easy replacement of the battery. Preferably the cutting tool is using a replaceable battery or even uses different ones out of a set of replaceable batteries.

As illustrated in FIG. 1, the cutting tool 100 includes one or more handles i.e. a first handle 108 and a second handle 110. The first handle 108 is operatively coupled with the first blade 102. Further, the first handle 108 defines a top portion 109 and a back portion 111. The second handle 110 is operatively coupled with the second blade 104. In closed position of the cutting tool 100, at least a part of the second handle 110 at least partially encloses the back portion 111 of the first handle 108. Although, the present embodiment illustrates the first handle 108 almost fully enclosed within the second handle 110, the second handle 110 may also be at least partially enclosed within the second handle 110.

In some embodiments, the first blade 102 and the second blade 104 may be one or more of a clip point blade, a drop point blade, a gut hook blade, a hawkbell blade, a needle point blade, a straight back blade, a sheepsfoot blade and a spear point blade.

In some embodiments, the first blade 102 and the second blade 104 may be made of aluminum or any other material as used or known in the art. Choice of the material for any of the first blade 102 and the second blade 104 will generally depend upon factors such as life, application, weight or other parameters related to the cutting tool 100. However, the present disclosure is not to be limited by the type of material of the first blade 102 and the second blade 104 in any manner.

During implementation, at least one of the first blade 102 and the second blade 104 may be a fixed blade while the other performs desired cutting action. Alternately or additionally, both the first blade 102 and the second blade 104 may be movable during the cutting action.

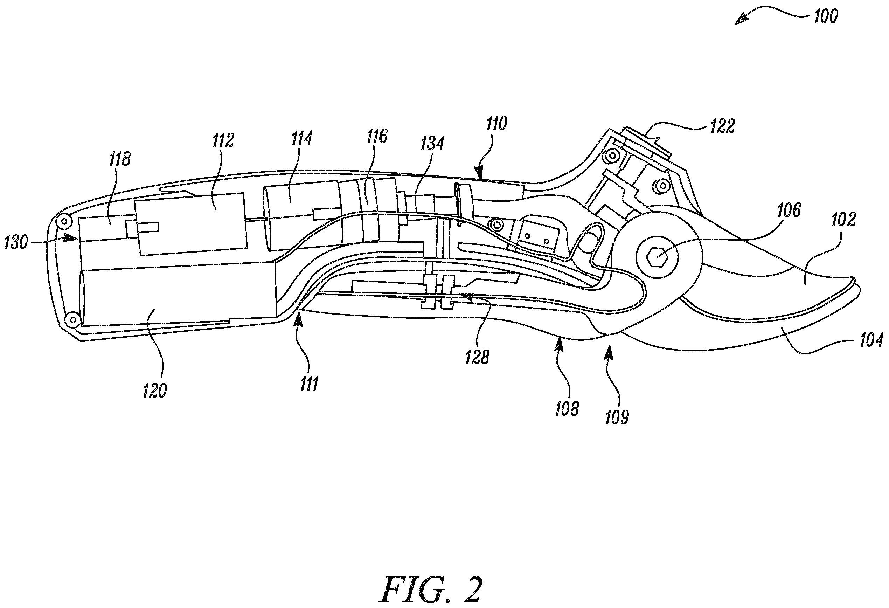

FIG. 2 illustrates the cutting tool 100 which includes a drive unit 130. The drive unit 130 includes a motor 112 and a gearbox 114. The drive unit 130 further includes a drum 116 comprising a clutch, a retraction spring and a winch. Further, the drive unit 130 includes a printed circuit board assembly (PCBA) 118 and a battery 120. In one embodiment the battery 120 is covered by the lid 132. The lid 132 may be slide opened to change the battery 120. The drive unit 130 is operatively coupled to at least one of the first blade 102 and the second blade 104. As illustrated in the present embodiment, the drive unit 130 is housed within the second handle 110. The battery 120 of the drive unit 130 is also housed within the second handle 110. This helps in reducing the dimensions and improving ergonomic profile of the first handle 108. The drive unit 130 is configured to selectively provide a supplemental motor force to assist a movement of at least one of the first blade 102 and the second blade 104 to perform the cutting action.

As illustrated in FIG. 2, a wire 134 is running between the first handle 108 and the second handle 110, and the first handle 108 and the second handle 110. The wire 134 is connected to the drive unit 130. In some embodiments, the wire 134 may be a sensor wire detecting a torque between the one or more blades 102, 104 and the one or more handles 108, 110. The wire 134 detects the force applied by the user which is further sent to a drive unit 130 (or say any processer of the cutting tool 100) to take the applied force into account to assist with any supplemental force, as per the need. In some embodiments, the wire 134 is substantially running through the first handle 108, or any other part/component of the cutting tool 100, in order to make the cutting tool 100 more compact, ergonomic and the like. Some part of the wire 134 may even run through the second handle 110 which allows uniform distribution of the wire 134.

In a preferred embodiment, all components of the drive unit 130 are housed in a single handle i.e. the second handle 110 as best illustrated in FIG. 2. This helps in reducing the thickness, dimensions, ergonomic profile or spatial footprint of the second handle 110, and the first handle 108. This even allows the combined profile of the second handle 110, and the first handle 108 to be realized as one part, particularly during closed state of the first handle 108.

In some embodiments, boundary lines (not shown) of both the first handle 108 and the second handle 110 may be parallel to each other. Alternately or additionally, the boundary lines of the one or more of handles i.e. the first handle 108 and the second handle 110 may be non-aligned with respect to each other.

In some embodiments, the cutting tool 100 could also include a switch to activate or deactivate the drive unit 130. In the depicted embodiment this switch is realized in top of the cutting tool 100 as slider or trigger 122, alternatively it as well could be realized as a slider of trigger. On engaging, moving or pressing the slider or trigger 122 the drive unit 130 gets switched on and off and thus the cutting tool 100 becomes convenient and safe to handle by common users. The drive unit 130 may be deactivated for instances which may require to save/extend battery life or allow uninterrupted operation of the power-assisted cutting tool 100, such as for low battery conditions. In such instances of the deactivated drive unit 130, it could be possible that the motor 112 will remain in a disengaged/OFF state leading to a purely user-based cutting action by the cutting tool 100, without any supplemental motor force.

In some embodiments, the slider or trigger 122 may be a button, a knob, a single pole single throw switch, a single pole double throw switch, a double pole single throw switch, a double pole double throw switch, a push-button switch, a toggle switch, a limit switch, a float switch, and the like. Alternately or additionally, a button, a knob, or any other switching means as used or known in the relevant art may be present in place of the slider or trigger 122.

In some embodiments, the battery 120 may be a primary battery, a secondary battery. For example, the battery 120 may be one or more of a lithiumion, a nickel cadmium, a nickel-metal hydride, and a lead-acid battery.

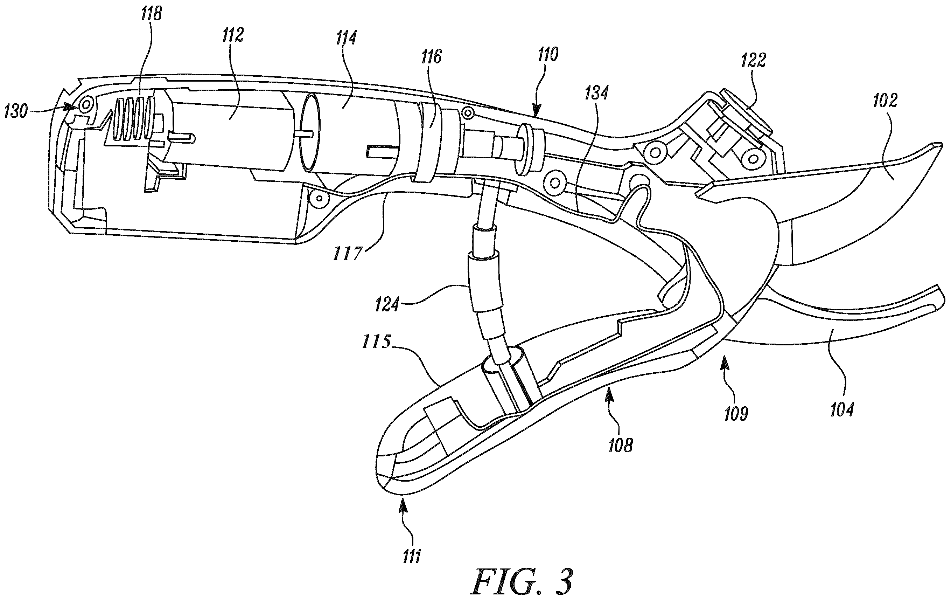

FIG. 3 illustrates the first handle 108 and the second handle 110 which have one or more inner sides 115, 117 respectively. Advantageously, in accordance with an embodiment of the present disclosure, elastic, rounded design of the one or more inner sides 115, 117 of both the first handle 108 and the second handle 110 may allow to avoid an undesirable crushing, in particular a pinching of operator's or user's hand, between the first handle 108 and the second handle 110, and the like.

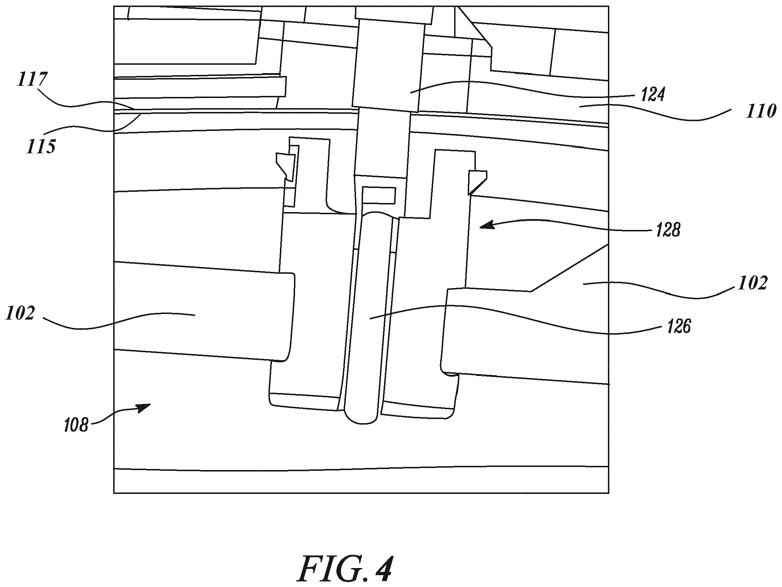

FIG. 4 illustrates an adapter 128 of the cutting tool 100. The cutting tool 100 further includes a rope 126 and a spring 124. The adapter 128 finds application for pre-fixing the spring 124 and the rope 126 with the first handle 110, without any direct engagement or contact of the spring 124 and the rope 126 with the first handle 110. The first blade 102 is passing through the adapter 128. The piercing of the first blade 102 through the adapter 128 helps in securing or locking of the first blade 102 within the adapter 128, and/or the bottom handle 110 as per the requirement.

In some embodiments, a connection of the adapter 128 with the first blade 102 may be achieved by pushing, sliding, and piercing the first blade 102 through the adapter 128. The adapter 128 may be made up of one or more of a material like plastic, rubber, glass and the like. Additionally, or alternatively, the first blade 102 may slide, pierce, pass into the adapter 128. The adapter 128 allows the smooth movement or disassembly of the first blade 102 by simple pulling action on the first blade 102.

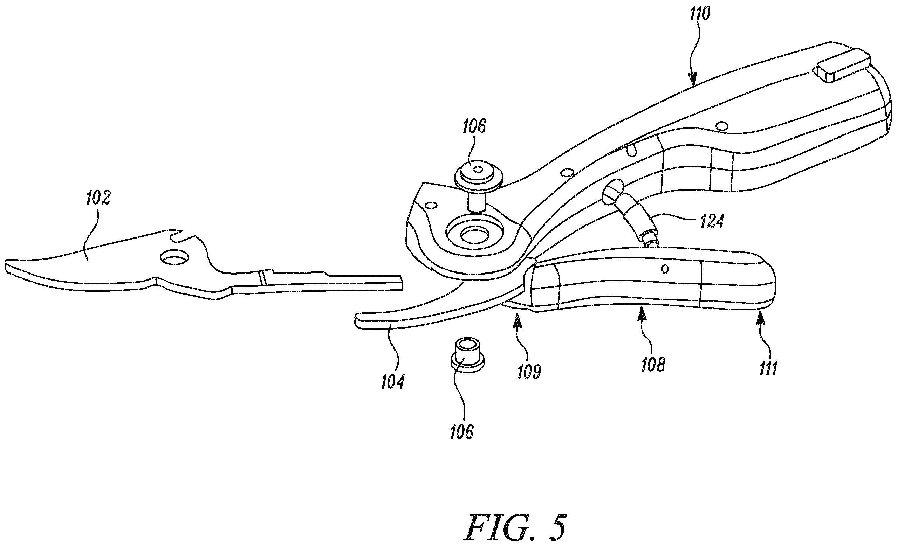

FIG. 5 illustrates the cutting tool 100 which includes a fastener106. The fastener 106 is provided at the pivoted position of the first blade 102 and the second blade 104. The fastener 106 pivotally couples the first handle 108 and the second handle 110. In this configuration, the fastener 106 helps in associating the first handle 108 and the second handle 110 together. Moreover, the fastener 106 allows ejection of the first blade 102, on disassembly of the fastener 106. The first blade 102 may be substituted with a new blade (i.e. another first blade 102, not shown) having the desired features.

In some embodiments, the fastener 106 may be any one or more of a coupling nut, a flange nut, a hex nut, a lock nut, a slotted nut, a square nut, a wheel nut and the like.

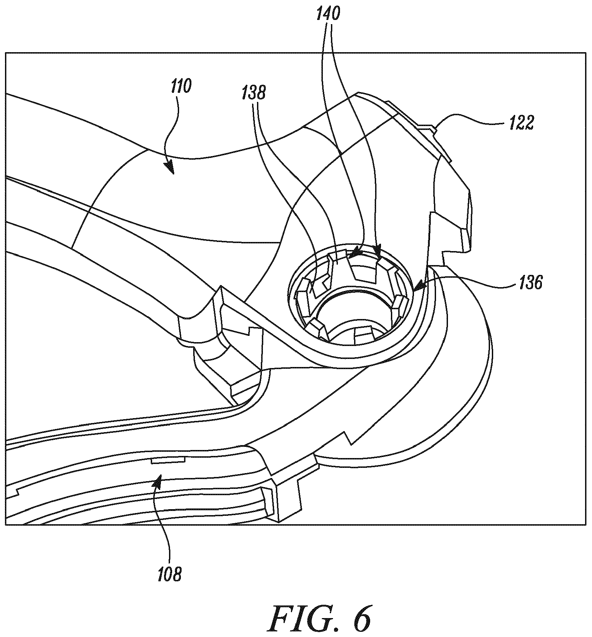

FIG. 6 illustrates a form fit 136 provided at the point of pivot between the first handle 108 and the second handle 110. The form fit 136 allows to avoid inadvertent disassociation of the first handle 108 and the second handle 110 even after the removal of the fastener 106. In a preferred embodiment, the form fit 136 is a removable connection. The form fit 136 helps to isolate the first handle 108 and the second handle 110 from any stresses, damages, or inadvertent force which could have led to disassembly of the first handle 108 and the second handle 110, in absence of the form fit 136 on disassembly of the fastener 106.

In the present embodiment, the form fit 136 is formed by one or more tabs 138 provided with at least one of the first handle 108 and the second handle 110. In the illustrated embodiments, the one or more tabs 138 are provided with the first handle 108. The one or more tabs 138 couple with one or more contours 140 provided with the second handle 110. Alternately, position of the one or more tabs 138 and the one or more contours 140 may be exchanged between the first handle 108 and the second handle 110. This coupling of the one or more tabs 138 and the one or more contours 140 of the form fit 136 prevents inadvertent dissociation of the first handle 108 and the second handle 110, such as during removal or disassembly of any of the first blade 102 and the second blade 104.

During implementation, the form fit 136 with the first handle 108, and the second handle 110 may be provided as an integral structural feature of the first handle 108 and the second handle 110. The form fit 136 may also be provided by attaching the tabs 138 through gluing, tying, screwing and the like. Alternately or additionally, the one or more handles i.e. the first handle 108 and the second handle 110, and the form fit 136 may be coupled together by using snap-fits, push-fits, or by connections like threads and the like. Further, the form fit 136 may be removably disassociated as per the requirements. The form fit 136 helps the wire 134 to retain its stability without disturbing any functionality of the cutting tool 100.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- 100: Cutting Tool
- 102: First blade
- 104: Second blade
- 106: Fastener
- 108: First handle
- 109: Top Portion
- 110: Second handle
- 111: Back Portion
- 112: Motor
- 114: Gear Box
- 115: Inner Side
- 116: Drum
- 117: Inner Side
- 118: Printed Circuit Board Assembly (PCBA)
- 120: Battery
- 122: Slider or Trigger
- 130: Drive unit
- 132: Lid
- 134: wire
- 136: Form fit
- 138: Tabs
- 140: Contours

## Claims

1. A cutting tool (100) comprising:
a first blade (102);
a second blade (104) pivotally coupled to the first blade (102) at a pivot point, wherein the first blade (102) and the second blade (104) together perform a cutting action on an object placed therebetween;
a first handle (108) operatively coupled to the first blade (102);
a second handle (110) operatively coupled to the second blade (104),
**characterized in that**:
the first handle (108) is pivotally coupled to the second handle (110) at the pivot point;
the first handle (108) and the second handle (110) are pivotally coupled together;
wherein a removable fastener (106) pivotally couples the first blade (102) and the second blade (104) at the pivot point and pivotally couples the first handle (108) and the second handle (110) at the pivot point, wherein removal of the fastener (106) decouples the first blade (102) from the second blade (104) and wherein removal of the fastener (106) not decouples the first handle (108) from the second handle (110).

2. The cutting tool (100) of claim 1, comprising a handle connection for pivotally coupling the first handle (108) and the second handle (110) together, wherein the handle connection is different from the removable fastener (106).

3. The cutting tool (100) of claim 2, wherein the handle connection comprises connection elements provided by, in particular formed to, the first handle (108) and the second handle (110) to connect the first handle (108) and the second handle (110) to each other.

4. The cutting tool (100 of claim 3, wherein the connection elements are configured to form a form fit connection.

5. The cutting tool (100) of any of claims 1 to 4, wherein removal of the fastener (106) allows ejection of the first blade (102) and/or the second blade (104), while first handle (108) and second handle (110) remain coupled, in particular by a handle connection different from the fastener (106), preferably by a form fit (136).

6. The cutting tool (100) of any of claims 4 of d.ÜmJ 1 to 5, wherein the form fit (136) or the form fit connection is provided at or close to the pivot point between the first handle (108) and the second handle (110)..

7. The cutting tool (100) of any of claims 4 to 6, wherein the form fit (136) is realized via a snap fit connection (136).

8. The cutting tool (100) of any of claims 4 to 7, wherein the form fit (136) is a removable connection.

9. The cutting tool (100) of any of claims 1 to 8, wherein the first handle (108) or the second handle (110) are provided with one or two or more, in particular resilient, tabs (138) forming a form fit (136) by coupling with one or more contours (140) provided on the respective other first or second handle (108, 110).

10. The cutting tool (100) of claim 9, wherein the first handle (108) and/or the second handle (110) comprise an opening that is concentrically arranged to the pivot point, wherein one or more of the contours (140) for coupling with the tabs (138) is/are formed by a surface delimiting or being arranged close to the opening of the first handle (108) or the second handle (110).

11. The cutting tool (100) of any of claims 9 or 10, wherein the one or more contours (140) are provided as a circular step arranged within the opening.

12. The cutting tool (100) of any of claims 9 to 11, wherein the one or two or more tabs (138) are formed integrally to the first or second handle (108, 110), in particular on or as a sleeve element or a ring element, in particular wherein the sleeve element or the ring element is arranged concentrically to the pivot point.

13. The cutting tool (100) of any of claims 9 to 12, wherein one or two or more tabs (138) are provided as snap elements or engagement hooks for form fittingly coupling with the one or more contours (140).

14. The cutting tool (100) of any of claims 1 to 13, wherein electrical components associated with the first handle (108) and within the second handle (110) are electrically connected via a wire (134), in particular wherein at least some of the associated components are incorporated inside of at least one of the handles (108, 110).

15. The cutting tool (100) of claim 14, wherein the wire (134) is a sensor wire (134), in particular wherein the sensor wire (134) is present substantially within the first handle (108).

## Patentansprüche

1. Schneidwerkzeug (100), umfassend:
eine erste Klinge (102);
eine zweite Klinge (104), die mit der ersten Klinge (102) an einem Schwenkpunkt schwenkbar gekoppelt ist, wobei die erste Klinge (102) und die zweite Klinge (104) zusammen eine Schneidaktion an einem Objekt durchführen, das dazwischen platziert ist;
einen ersten Griff (108), der mit der ersten Klinge (102) wirkgekoppelt ist;
einen zweiten Griff (110), der mit der zweiten Klinge (104) wirkgekoppelt ist,
**dadurch gekennzeichnet, dass;**
der erste Griff (108) mit dem zweiten Griff (110) an dem Schwenkpunkt schwenkbar gekoppelt ist;
der erste Griff (108) und der zweite Griff (110) schwenkbar zusammengekoppelt sind;
wobei ein entfernbares Befestigungselement (106) die erste Klinge (102) und die zweite Klinge (104) an dem Schwenkpunkt schwenkbar koppelt und den ersten Griff (108) und den zweiten Griff (110) an dem Schwenkpunkt schwenkbar koppelt, wobei eine Entfernung des Befestigungselements (106) die erste Klinge (102) von der zweiten Klinge (104) entkoppelt und wobei die Entfernung des Befestigungselements (106) den ersten Griff (108) nicht von dem zweiten Griff (110) entkoppelt.

2. Schneidwerkzeug (100) nach Anspruch 1, umfassend eine Griffverbindung zum schwenkbaren Zusammenkoppeln des ersten Griffs (108) und des zweiten Griffs (110), wobei sich die Griffverbindung von dem entfernbaren Befestigungselement (106) unterscheidet.

3. Schneidwerkzeug (100) nach Anspruch 2, wobei die Griffverbindung Verbindungselemente umfasst, die durch den ersten Griff (108) und den zweiten Griff (110) bereitgestellt, insbesondere damit ausgebildet, sind, um den ersten Griff (108) und den zweiten Griff (110) miteinander zu verbinden.

4. Schneidwerkzeug (100) nach Anspruch 3, wobei die Verbindungselemente konfiguriert sind, um eine Formschlussverbindung auszubilden.

5. Schneidwerkzeug (100) nach einem der Ansprüche 1 bis 4, wobei die Entfernung des Befestigungselements (106) einen Ausstoß der ersten Klinge (102) und/oder der zweiten Klinge (104) ermöglicht, während der erste Griff (108) und der zweite Griff (110) gekoppelt bleiben, insbesondere durch eine Griffverbindung, die sich von dem Befestigungselement (106) unterscheidet, vorzugsweise durch einen Formschluss (136).

6. Schneidwerkzeug (100) nach einem der Ansprüche 4 bis 5, wobei der Formschluss (136) oder die Formschlussverbindung an oder nahe dem Schwenkpunkt zwischen dem ersten Griff (108) und dem zweiten Griff (110) bereitgestellt ist.

7. Schneidwerkzeug (100) nach einem der Ansprüche 4 bis 6, wobei der Formschluss (136) über eine Schnappverbindung (136) realisiert ist.

8. Schneidwerkzeug (100) nach einem der Ansprüche 4 bis 7, wobei der Formschluss (136) eine entfernbare Verbindung ist.

9. Schneidwerkzeug (100) nach einem der Ansprüche 1 bis 8, wobei der erste Griff (108) oder der zweite Griff (110) mit einem oder zwei oder mehreren, insbesondere elastischen, Laschen (138) versehen ist, die einen Formschluss (136) ausbilden, durch das Koppeln mit einer oder mehreren Konturen (140), die an dem jeweiligen anderen ersten oder zweiten Griff (108, 110) bereitgestellt sind.

10. Schneidwerkzeug (100) nach Anspruch 9, wobei der erste Griff (108) und/oder der zweite Griff (110) eine Öffnung umfassen, die zu dem Schwenkpunkt konzentrisch angeordnet ist, wobei eine oder mehrere der Konturen (140) zum Koppeln mit den Laschen (138) durch eine Oberfläche ausgebildet ist/sind, die nahe der Öffnung des ersten Griffs (108) oder des zweiten Griffs (110) begrenzt oder angeordnet ist.

11. Schneidwerkzeug (100) nach einem der Ansprüche 9 oder 10, wobei die eine oder die mehreren Konturen (140) als eine kreisförmige Stufe bereitgestellt sind, die innerhalb der Öffnung angeordnet ist.

12. Schneidwerkzeug (100) nach einem der Ansprüche 9 bis 11, wobei die eine oder die zwei oder die mehreren Laschen (138) an den ersten oder den zweiten Griff (108, 110), insbesondere an oder als ein Hülsenelement oder ein Ringelement, einstückig ausgebildet sind, insbesondere wobei das Hülsenelement oder das Ringelement zu dem Schwenkpunkt konzentrisch angeordnet ist.

13. Schneidwerkzeug (100) nach einem der Ansprüche 9 bis 12, wobei eine oder zwei oder mehrere Laschen (138) als Schnappelemente oder Eingriffshaken zum formschlüssigen Koppeln mit der einen oder den mehreren Konturen (140) bereitgestellt sind.

14. Schneidwerkzeug (100) nach einem der Ansprüche 1 bis 13, wobei elektrische Komponenten, die dem ersten Griff (108) zugeordnet und innerhalb des zweiten Griffs (110) sind, über einen Draht (134) elektrisch verbunden sind, insbesondere wobei mindestens einige der zugeordneten Komponenten im Inneren mindestens eines der Griffe (108, 110) aufgenommen sind.

15. Schneidwerkzeug (100) nach Anspruch 14, wobei der Draht (134) ein Sensordraht (134) ist, insbesondere wobei der Sensordraht (134) im Wesentlichen innerhalb des ersten Griffs (108) vorhanden ist.

## Revendications

1. Outil de coupe (100) comprenant :
une première lame (102) ;
une seconde lame (104) accouplée de manière pivotante à la première lame (102) au niveau d'un point de pivot, dans lequel la première lame (102) et la seconde lame (104) effectuent ensemble une action de coupe sur un objet placé entre elles ;
une première poignée (108) accouplée de manière fonctionnelle à la première lame (102) ;
une seconde poignée (110) accouplée de manière fonctionnelle à la seconde lame (104),
**caractérisé en ce que ;**
la première poignée (108) est accouplée de manière pivotante à la seconde poignée (110) au point de pivotement ;
la première poignée (108) et la seconde poignée (110) sont accouplées de manière pivotante ensemble ;
dans lequel un élément de fixation amovible (106) accouple de manière pivotante la première lame (102) et la seconde lame (104) au niveau du point de pivot et accouple de manière pivotante la première poignée (108) et la seconde poignée (110) au point de pivot, dans lequel le retrait de l'élément de fixation (106) désaccouple la première lame (102) de la seconde lame (104) et dans lequel le retrait de l'élément de fixation (106) ne désaccouple pas la première poignée (108) de la seconde poignée (110).

2. Outil de coupe (100) selon la revendication 1, comprenant un raccordement de poignée pour accoupler de manière pivotante la première poignée (108) et la seconde poignée (110) ensemble, dans lequel le raccordement de poignée est différent de l'élément de fixation (106) amovible.

3. Outil de coupe (100) selon la revendication 2, dans lequel le raccordement de poignée comprend des éléments de raccordement fournis par, en particulier formés à, la première poignée (108) et la seconde poignée (110) pour raccorder la première poignée (108) et la seconde poignée (110) l'une à l'autre.

4. Outil de coupe (100) selon la revendication 3, dans lequel les éléments de raccordement sont conçus pour former un raccordement à ajustement de forme.

5. Outil de coupe (100) selon l'une quelconque des revendications 1 à 4, dans lequel le retrait de l'élément de fixation (106) permet l'éjection de la première lame (102) et/ou de la seconde lame (104), tandis que la première poignée (108) et la seconde poignée (110) restent accouplées, en particulier par un raccordement de poignée différent de l'élément de fixation (106), de préférence par un ajustement de forme (136).

6. Outil de coupe (100) selon l'une quelconque des revendications 4 à 5, dans lequel l'ajustement de forme (136) ou le raccordement à ajustement de forme est fourni au niveau ou à proximité du point de pivotement entre la première poignée (108) et la seconde poignée (110).

7. Outil de coupe (100) selon l'une quelconque des revendications 4 à 6, dans lequel l'ajustement de forme (136) est réalisé par l'intermédiaire d'un raccordement à ajustement encliquetable (136).

8. Outil de coupe (100) selon l'une quelconque des revendications 4 à 7, dans lequel l'ajustement de forme (136) est
un raccordement amovible.

9. Outil de coupe (100) selon l'une quelconque des revendications 1 à 8, dans lequel la première poignée (108) ou la seconde poignée (110) sont pourvues d'une ou deux languettes (138) ou plus, en particulier élastiques, formant un ajustement de forme (136) par accouplement avec un ou plusieurs contours (140) fournis sur l'autre première ou seconde poignée respective (108, 110).

10. Outil de coupe (100) selon la revendication 9, dans lequel la première poignée (108) et/ou la seconde poignée (110) comprennent une ouverture qui est agencée de manière concentrique au point de pivotement, dans lequel un ou plusieurs des contours (140) pour accouplement avec les languettes (138) sont formés par une surface délimitant ou étant agencés près de l'ouverture de la première poignée (108) ou de la seconde poignée (110).

11. Outil de coupe (100) selon l'une quelconque des revendications 9 ou 10, dans lequel le ou les contours (140) sont fournis en tant qu'étape circulaire agencée à l'intérieur de l'ouverture.

12. Outil de coupe (100) selon l'une quelconque des revendications 9 à 11, dans lequel la ou les languettes (138) sont formées d'une seule pièce à la première ou seconde poignée (108, 110), en particulier sur ou en tant qu'un élément de manchon ou un élément annulaire, en particulier dans lequel l'élément de manchon ou l'élément annulaire est agencé de manière concentrique au point de pivotement.

13. Outil de coupe (100) selon l'une quelconque des revendications 9 à 12, dans lequel une ou deux languettes (138) ou plus sont fournies en tant qu'éléments d'encliquetage ou crochets de mise en prise pour former un accouplement de manière ajustée avec le ou les contours (140).

14. Outil de coupe (100) selon l'une quelconque des revendications 1 à 13, dans lequel des composants électriques associés à la première poignée (108) et à l'intérieur de la seconde poignée (110) sont connectés électriquement par l'intermédiaire d'un fil (134), en particulier dans lequel au moins certains des composants associés sont incorporés à l'intérieur d'au moins l'une des poignées (108, 110).

15. Outil de coupe (100) selon la revendication 14, dans lequel le fil (134) est un fil de capteur (134), en particulier dans lequel le fil de capteur (134) est présent sensiblement à l'intérieur de la première poignée (108).
